# EUROPEAN PATENT SPECIFICATION

(11) **EP 3 153 728 B1**
(45) Date of publication and mention of the grant of the patent: **07.11.2018**
(21) Application number: 16187017.5
(22) Date of filing: 02.09.2016
(51) Int. Cl.: F16C 33/38, F16C 33/46

(54) **OUTER RING GUIDED RESIN CAGE, INJECTION MOLDING DIE, AND METHOD FOR MANUFACTURING OUTER RING GUIDED RESIN CAGE**
AM AUßENRING GEFÜHRTER HARZKÄFIG, SPRITZGUSSFORM UND VERFAHREN ZUR HERSTELLUNG EINES SOLCHEN KÄFIGS
CAGE EN RÉSINE GUIDÉE SUR BAGUE EXTÉRIEURE, MATRICE DE MOULAGE ET MÉTHODE DE FABRICATION POUR UNE TELLE CAGE

(30) Priority: 08.10.2015 JP 2015199927
(43) Date of publication of application: 12.04.2017
(73) Proprietor: Nakanishi Metal Works Co., Ltd., Osaka-shi Osaka 530-8566 (JP)
(72) Inventor: YAMAMOTO, Kiyoshi, Osaka, 530-8566 (JP)
(74) Representative: Vossius & Partner Patentanwälte Rechtsanwälte mbB

(56) References cited:
- DE-A1- 4 241 014
- DE-U1-212013 000 259
- JP-A- H07 317 774
- JP-A- 2014 105 809
- US-A- 3 284 146

## Description

The present invention relates to an outer ring guided resin cage suitable for a high-speed rotation bearing, which is used for separating rolling elements of a rolling bearing at an equi-distance so that the rolling elements do not come into contact with each other.

In a high-speed rotation bearing for use in a working machine, an outer ring guided cage to be guided by an inner peripheral surface of an outer ring is used in order to prevent whirling of the cage and to reduce friction torque and wear of a bearing.

In an outer ring guided resin cage manufactured by subjecting an outer ring guided cage to injection molding, burrs formed on a parting line (radially outwardly projecting burrs as a parting line mark on slide cores) are formed on the outer peripheral surface of the cage.

When burrs formed on a parting line on the outer peripheral surface of a cage come into slide contact with the inner peripheral surface of a bearing outer ring, a rotational torque of the bearing may increase or fluctuate, and the inner peripheral surface of the bearing outer ring or the outer peripheral surface of the cage may be worn.

As countermeasures against the aforementioned drawbacks, the following countermeasures (1) to (3) are proposed.
(1) Removing radially outwardly projecting burrs formed on a parting line.
(2) Making the outer diameter of column parts of a cage small, and making the outer diameter of upper and lower annular ring-shaped parts large.
(3) Forming a linearly extending concave part in the outer peripheral surface of column parts of a cage along the axial direction, and forming a parting line in the concave part (refer to e.g. JP 2014-101946 A (See Fig. 1 to Fig. 4) (Patent Document 1)).

In the countermeasure (1) against the drawbacks, an operation of removing burrs formed on a parting line is necessary. This may increase the manufacturing cost.

Further, in the countermeasure (2) against the drawbacks, in view of a point that burrs on a parting line are always formed on an outer peripheral surface, contact of a tip end (a tip end of the burrs) that projects radially outwardly with the inner peripheral surface of an outer ring is unavoidable. Therefore, it may be impossible to eliminate the aforementioned drawback.

Further, in the countermeasure (3) against the drawbacks, it is possible to eliminate the aforementioned drawbacks by making the concave part to a required size. However, a stress may be concentrated on the concave part, and the strength may be lowered.

JP 2014-105809 A discloses a retainer including an annular part wherein the outer peripheral surface, in the cross-section in the shaft direction, has a regular polygonal shape. This retainer is used for a cylindrical roller bearing that rotates at a relatively low speed, and is lubracted by oil bath lubrication that is employed upon receiving a heavy load.

In view of the aforementioned circumstances, an object of the present invention is to provide an outer ring guided resin cage which enables to securely eliminate the aforementioned drawbacks on an outer ring guide, and to prevent lowering of the strength without increasing the manufacturing cost. This object is achieved with the features of the claims.

In order to achieve the aforementioned object, an outer ring guided resin cage according to the present invention is constituted by two annular ring-shaped parts away from each other in an axial direction, and a plurality of column parts for connecting between the annular ring-shaped parts, and is configured such that rolling elements of a rolling bearing are accommodated in pockets to be formed between the column parts adjacent to each other, and that the rolling elements are separated from each other at an equi-distance so that the rolling elements do not come into contact with each other, the outer ring guided resin cage being guided by an inner peripheral surface of an outer ring of the bearing. In the aforementioned configuration, a radial outer surface facing the outer ring has a regular polygonal shape when viewed in the axial direction. The column part is formed at the middle of an outer surface in a peripheral direction, the outer surface corresponding to a side of the regular polygonal shape. Burrs formed on a parting line extend in the axial direction on a radial outer surface of the column parts.

In the outer ring guided resin cage as described above, the radial outer surface to be guided by the outer ring of the rolling bearing is not formed into a cylindrical surface, but is formed into a regular polygonal shape when viewed in the axial direction. The column part of the cage is formed at the middle of the outer surface in the peripheral direction, the outer surface corresponding to a side of the regular polygonal shape. The burrs formed on a parting line extend in the axial direction on the radial outer surface of the column parts.

According to the aforementioned configuration, burrs formed on a parting line do not come into contact with the inner peripheral surface of the bearing outer ring for guiding the cage without removing burrs formed on a parting line (radially outwardly projecting burrs as a parting line mark on slide cores). This makes it possible to avoid an increase in the manufacturing cost, unlike the countermeasure (1) of removing burrs formed on a parting line, and to eliminate a possibility that the countermeasure on an outer ring guide may be insufficient, unlike the countermeasure (2) of making the outer diameter of column parts of a cage small, and of making the outer diameter of upper and lower annular ring-shaped parts large.

In addition, there is no possibility that a stress may be concentrated on a concave part, and the strength may be lowered, unlike the countermeasure (3) of forming a linearly extending concave part in the outer peripheral surface of column parts of a cage along the axial direction, and of forming a parting line in the concave part.

In the aforementioned configuration, preferably, an apex position of the regular polygonal shape of the radial outer surface may serve as an arc-shaped convex surface when viewed in the axial direction.

In the outer ring guided resin cage as described above, a portion of the radial outer surface formed into a regular polygonal shape when viewed in the axial direction, which comes into contact with the inner peripheral surface of the bearing outer ring for guiding the cage, has a smooth arc shape. This makes it possible to reduce a rotational torque of the bearing, and to reduce wear of the cage.

In order to achieve the aforementioned object, an injection molding die according to the present invention is an injection molding die for use in manufacturing an outer ring guided resin cage by radial draw injection molding, the outer ring guided resin cage being constituted by two annular ring-shaped parts away from each other in an axial direction, and a plurality of column parts for connecting between the annular ring-shaped parts, and being configured such that rolling elements of a rolling bearing are accommodated in pockets to be formed between the column parts adjacent to each other, and that the rolling elements are separated from each other at an equi-distance so that the rolling elements do not come into contact with each other, the outer ring guided resin cage being guided by an inner peripheral surface of an outer ring of the bearing. In the aforementioned configuration, an inner surface which forms a radial outer surface on a slide core array constituted by a plurality of slide cores arrayed side by side in a peripheral direction has a regular polygonal shape when viewed in the axial direction, the inner surface forming the radial outer surface and the pockets of the cage. A middle of the pockets in the peripheral direction serves as an apex position of the regular polygonal shape. A radial outer surface of the column parts serves as a divided position of the slide cores.

In the injection molding die as described above, the radial outer surface facing the bearing outer ring of the outer ring guided resin cage molded by using the injection molding die has a regular polygonal shape when viewed in the axial direction. The column parts of the cage are formed at the middle of the outer surface in the peripheral direction, the outer surface corresponding to a side of the regular polygonal shape. The radially outwardly projecting burrs as a parting line mark on the slide cores are formed to extend in the axial direction on the radial outer surface of the column parts.

According to the aforementioned configuration, in the outer ring guided resin cage molded as described above, burrs formed on a parting line do not come into contact with the inner peripheral surface of the bearing outer ring for guiding the cage without removing burrs formed on a parting line (radially outwardly projecting burrs as a parting line mark on the slide cores). This makes it possible to avoid an increase in the manufacturing cost, unlike the countermeasure (1) of removing burrs formed on a parting line, and to eliminate a possibility that the countermeasure on an outer ring guide may be insufficient, unlike the countermeasure (2) of making the outer diameter of column parts of a cage small, and of making the outer diameter of upper and lower annular ring-shaped parts large.

In addition, there is no possibility that a stress may be concentrated on a concave part, and the strength may be lowered, unlike the countermeasure (3) of forming a linearly extending concave part in the outer peripheral surface of column parts of a cage along the axial direction, and of forming a parting line in the concave part.

In the aforementioned configuration, preferably, the apex positions of the regular polygonal shape to be formed by the inner surface of the slide core array may serve as arc-shaped concave surfaces when viewed in the axial direction.

In the injection molding die as described above, the apex positions of the regular polygonal shape of the radial outer surface of the outer ring guided resin cage to be molded when viewed in the axial direction serve as the arc-shaped convex surfaces when viewed in the axial direction.

According to the aforementioned configuration, in the outer ring guided resin cage molded by using the injection molding die, a portion of the radial outer surface, which comes into contact with the inner peripheral surface of the bearing outer ring for guiding the cage, has a smooth arc shape. This makes it possible to reduce a rotational torque of the bearing, and to reduce wear of the cage.

An outer ring guided resin cage manufacturing method according to the present invention includes manufacturing the outer ring guided resin cage by radial draw injection molding with use of the injection molding die having the aforementioned configuration.

### Advantageous Effects of Invention

The outer ring guided resin cage, the injection molding die, and the method for manufacturing the outer ring guided resin cage according to the present invention as described above provide advantageous effects of implementing all the following operations:
(1) securely eliminating the drawbacks on an outer ring guide i.e. an increase or fluctuation of a rotational torque of a bearing, and wear of the inner peripheral surface of a bearing outer ring and the outer peripheral surface of a cage;
(2) suppressing an increase in the manufacturing cost of an outer ring guided resin cage; and
(3) preventing lowering of the strength of an outer ring guided resin cage.

### Brief Description of Drawings

Fig. 1 is a front view of an angular ball bearing using an outer ring guided resin cage according to a first embodiment of the present invention;
Fig. 2 is an enlarged longitudinal side view of major components of the angular ball bearing;
Fig. 3 is a perspective view of the outer ring guided resin cage according to the first embodiment of the present invention;
Fig. 4 is an enlarged longitudinal front view of major components of the outer ring guided resin cage;
Fig. 5 is an enlarged schematic longitudinal front view of major components of an injection molding die according to the first embodiment of the present invention;
Fig. 6 is an enlarged longitudinal side view of major components of a cylindrical roller bearing using an outer ring guided resin cage according to a second embodiment of the present invention;
Fig. 7 is a perspective view of the outer ring guided resin cage according to the second embodiment of the present invention;
Fig. 8 is an enlarged longitudinal front view of major components of an outer ring guided resin cage according to a third embodiment of the present invention;
Fig. 9 is an enlarged schematic longitudinal front view of major components of an injection molding die according to the third embodiment of the present invention;
Fig. 10 is an enlarged longitudinal front view of major components of an outer ring guided resin cage according to a fourth embodiment of the present invention; and
Fig. 11 is an enlarged schematic longitudinal front view of major components of an injection molding die according to the fourth embodiment of the present invention.

### Description of Embodiments

Next, embodiments of the present invention will be described in detail with reference to the attached drawings. However, the present invention is not limited to the embodiments shown in the attached drawings but includes all of embodiments meeting the requirements described in the claims.

Note that in the present specification, diagrams when viewed in the axial direction are front views.

### First Embodiment

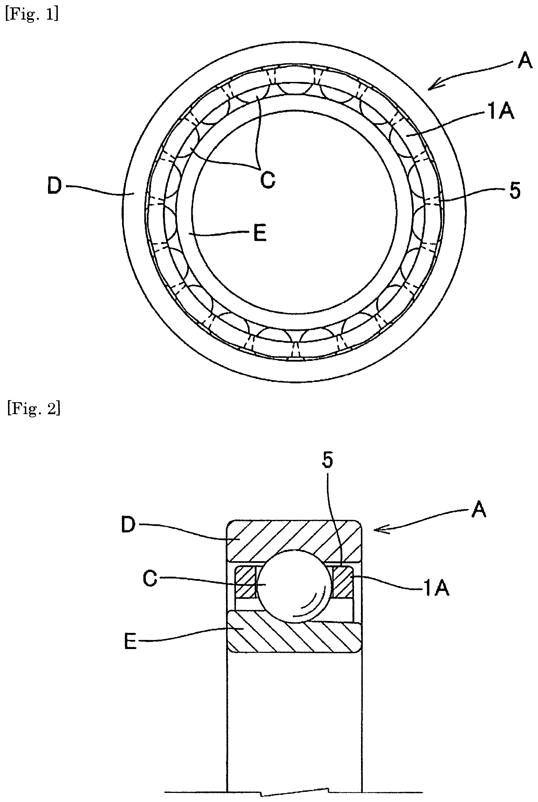

As shown in the front view of Fig. 1 and in the enlarged longitudinal side view of major components of Fig. 2, an outer ring guided resin cage 1A according to the first embodiment of the present invention is an outer ring guided cage, in which rolling elements C, C, ... which roll between an outer ring D and an inner ring E of an angular ball bearing A are separated from each other at an equi-distance so that the rolling elements C, C, ... do not come into contact with each other; and is guided by the inner peripheral surface of the outer ring D.

Further, the outer ring guided resin cage 1A is such that a radial outer surface 5 facing the outer ring D has a regular polygonal shape when viewed in the axial direction. In the example of Fig. 1, the radial outer surface 5 has a regular nonadecagonal shape. When the number of pockets P, P, ..., in other words, the number of the rolling elements C, C, ... is n, the radial outer surface 5 of the outer ring guided resin cage 1A has a regular n-gonal shape when viewed in the axial direction.

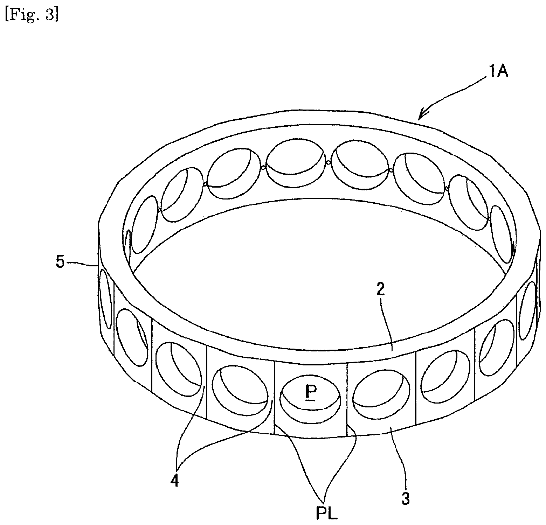

As shown in the perspective view of Fig. 3, the outer ring guided resin cage 1A is constituted by two annular ring-shaped parts 2 and 3 away from each other in the axial direction, and a plurality of column parts 4, 4 ... for connecting between the annular ring-shaped parts 2 and 3. The rolling elements C, C, ... (refer to Fig. 1 and Fig. 2) are accommodated in the pockets P, P, ... to be formed between the column parts 4, 4, ... adjacent to each other.

Burrs PL, PL, ... formed on a parting line (radially outwardly projecting burrs as a parting line mark on slide cores to be described later) extend in the axial direction at the middle of the column parts 4, 4, ... in the peripheral direction on the radial outer surface 5 of the outer ring guided resin cage 1A.

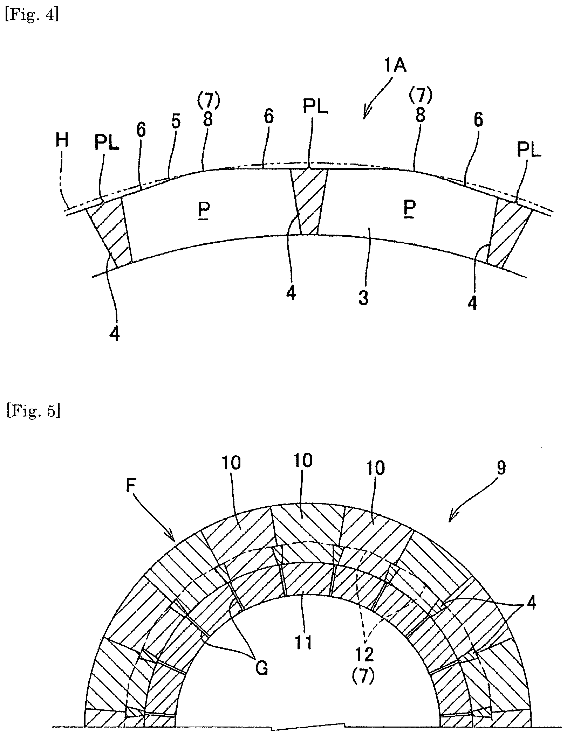

As shown in the enlarged longitudinal front view of major components of Fig. 4, the column part 4 is formed at the middle of an outer surface 6 in the peripheral direction, which corresponds to a side of a regular polygonal shape. The burrs PL, PL, ... formed on a parting line extend in the axial direction at the middle of the column parts 4, 4, ... in the peripheral direction as described above.

Apex positions 7, 7, ... of the regular polygonal shape of the radial outer surface 5 of the outer ring guided resin cage 1A are formed on arc-shaped convex surfaces 8, 8, ... when viewed in the axial direction.

The burrs PL, PL, ... formed on a parting line are located radially inwardly than a cylindrical surface H which circumscribes the convex surfaces 8, 8, ....

Next, an injection molding die for use in manufacturing the outer ring guided resin cage 1A by injection molding, and a method for manufacturing the outer ring guided resin cage 1A are described. As shown in the enlarged schematic longitudinal front view of major components of Fig. 5, an injection molding die 9 is constituted by slide cores 10, 10, ..., an inner diameter core 11, and the like. The injection molding die 9 is used to manufacture the outer ring guided resin cage 1A by radial draw injection molding. The slide cores 10, 10, ... are used to form the radial outer surface 5 and the pockets P, P, ... of the cage 1A shown in Fig. 3. The inner diameter core 11 is used to form the radial inner surface of the cage 1A shown in Fig. 3.

The inner surface which forms the radial outer surface 5 of the cage 1A on a slide core array F constituted by the slide cores 10, 10, ... arrayed side by side in the peripheral direction has a regular polygonal shape (in the embodiment, a regular nonadecagonal shape) when viewed in the axial direction so as to form the radial outer surface 5 of the cage 1A shown in Fig. 3.

Further, the apex positions 7, 7, ... of the regular polygonal shape are formed to coincide with the middle of the pockets P, P, ... of the cage 1A shown in Fig. 3 in the peripheral direction, and the divided positions of the slide cores 10, 10, ... serve as the middle of the column parts 4, 4, ... in the peripheral direction.

Furthermore, the apex positions 7, 7 ... of the regular polygonal shape to be formed by the inner surface of the slide core array F serve as arc-shaped concave surfaces 12, 12, ... when viewed in the axial direction so as to form the convex surfaces 8, 8, ... shown in Fig. 4.

The outer ring guided resin cage 1A is manufactured by injecting and molding a molten synthetic resin material from gates G, G, ... into the cavity of the injection molding die 9 in a state that the injection molding die 9 is clamped, followed by cooling and solidification. Note that the number, the positions, and the pattern of the gates G, G, ..., may be optionally selected according to the required specifications, or the like.

In this example, it is possible to appropriately use a material containing thermoplastic resin such as polyamides (PA6, PA66, PA46, etc.), aromatic nylons (PA9T, PA6T, etc.), polyphenylene sulfide (PPS), or PEEK (polyether etherketone), as an example of the synthetic resin material for use in injection molding. Further, the material may contain glass fibers or carbon fibers as a reinforcing material.

As shown in Fig. 3 and Fig. 4, in the outer ring guided resin cage 1A manufactured as described above, radially outwardly projecting burrs as a parting line mark on the slide cores 10, 10, ... shown in Fig. 5, namely, the burrs PL, PL, ... on a parting line are formed.

### Second Embodiment

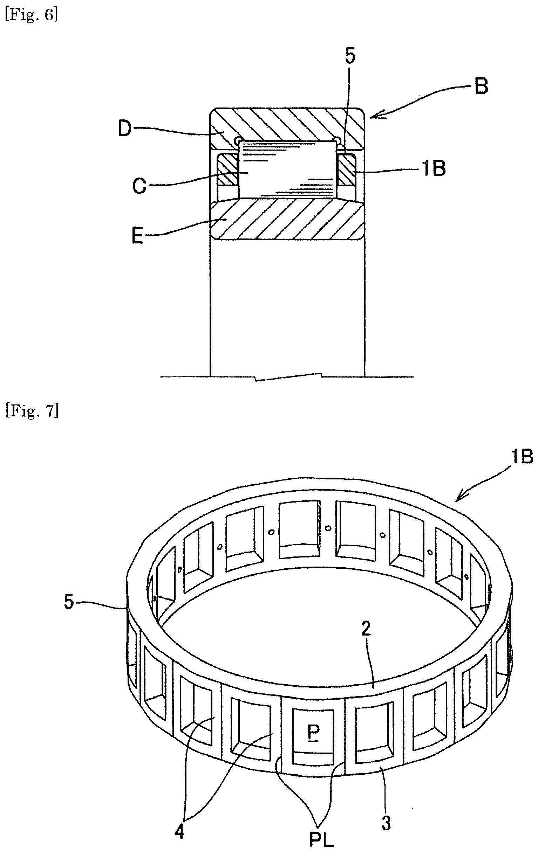

In the enlarged longitudinal side view of major components of Fig. 6 and in the perspective view of Fig. 7, elements indicated with the same reference numerals as those in Fig. 1 to Fig. 3 of the first embodiment are the same or equivalent elements.

Specifically, an outer ring guided resin cage 1B according to the second embodiment of the present invention is an outer ring guided cage, in which rolling elements C, C, ... which roll between an outer ring D and an inner ring E of a cylindrical roller bearing B are separated from each other at an equi-distance so that the rolling elements C, C, ... do not come into contact with each other; and is guided by the inner peripheral surface of the outer ring D.

Further, the outer ring guided resin cage 1B is such that a radial outer surface 5 facing the outer ring D has a regular nonadecagonal shape when viewed in the axial direction. Burrs PL, PL, ... formed on a parting line extend in the axial direction at the middle of column parts 4, 4, ... on the radial outer surface 5 in the peripheral direction.

It is also possible to manufacture the outer ring guided resin cage 1B by radial draw injection molding with use of a same injection molding die as used in manufacturing the outer ring guided resin cage 1A of the first embodiment.

### Third Embodiment

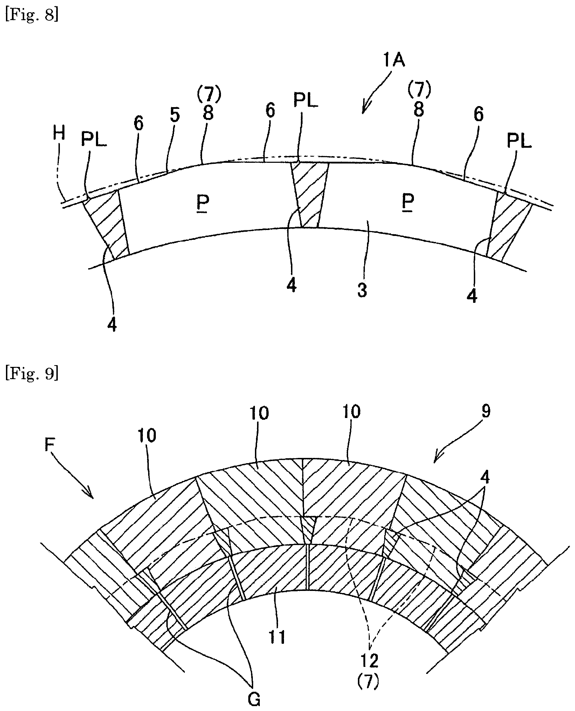

In the enlarged longitudinal front view of major components of Fig. 8 and in the enlarged schematic longitudinal front view of major components of an injection molding die of Fig. 9, elements indicated with the same reference numerals as those in Fig. 4 and Fig. 5 of the first embodiment are the same or equivalent elements.

Specifically, an injection molding die 9 shown in Fig. 9 for use in manufacturing an outer ring guided resin cage 1A according to the third embodiment of the present invention by injection molding is such that divided positions of slide cores 10, 10, ... are not located at the middle of column parts 4, 4, ... in the peripheral direction, but are located at radially offset positions.

According to the aforementioned configuration, burrs PL, PL, ... formed on a parting line of the outer ring guided resin cage 1A shown in Fig. 8 are not formed at the middle of the radial outer surface of the column parts 4, 4, ... in the peripheral direction, but are formed at radially offset positions.

### Fourth Embodiment

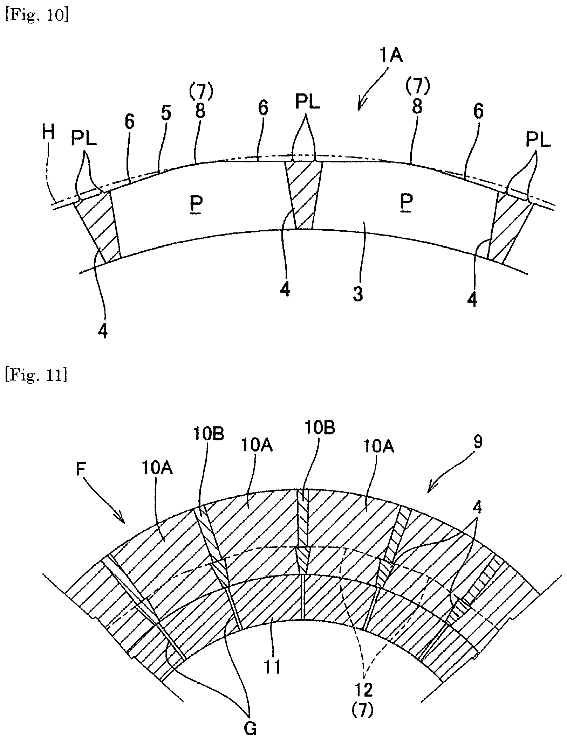

In the enlarged longitudinal front view of major components of Fig. 10 and in the enlarged schematic longitudinal front view of major components of an injection molding die of Fig. 11, elements indicated with the same reference numerals as those in Fig. 4 and Fig. 5 of the first embodiment are the same or equivalent elements.

Specifically, an injection molding die 9 shown in Fig. 11 for use in manufacturing an outer ring guided resin cage 1A according to the fourth embodiment of the present invention by injection molding is such that the shapes of slide cores 10A and 10B to be alternately disposed in the peripheral direction are different from each other, and the size of the slide cores 10B, 10B, ... is smaller than the length of a radial outer surface of column parts 4, 4, ... in the peripheral direction.

According to the aforementioned configuration, burrs PL, PL, ... formed on a parting line of the outer ring guided resin cage 1A shown in Fig. 10 are not formed at the middle of the radial outer surface of each of the column parts 4 in the peripheral direction, but are formed at two positions radially offset from each other.

In each of the outer ring guided resin cages 1A and 1B having the aforementioned configuration, the radial outer surface 5 to be guided by the outer ring D of each of the rolling bearings A and B is not formed into a cylindrical surface, but is formed into a regular polygonal shape when viewed in the axial direction. The column parts 4, 4, ... of each of the cages 1A and 1B are formed at the middle of the outer surfaces 6, 6, ... in the peripheral direction, which correspond to the sides of the regular polygonal shape. The burrs PL, PL, ... formed on a parting line extend in the axial direction on the radial outer surface of the column parts 4, 4, ....

According to the aforementioned configuration, burrs PL, PL, ... formed on a parting line do not come into contact with the inner peripheral surface of the bearing outer ring D for guiding each of the cages 1A and 1B without removing burrs PL, PL, ... formed on a parting line (radially outwardly projecting burrs as a parting line mark on the slide cores 10, 10, ... or on the slide cores 10A, 10B, ...). This makes it possible to avoid an increase in the manufacturing cost, unlike the countermeasure (1) of removing burrs formed on a parting line, and to eliminate a possibility that the countermeasure on an outer ring guide may be insufficient, unlike the countermeasure (2) of making the outer diameter of column parts of a cage small, and of making the outer diameter of upper and lower annular ring-shaped parts large.

In addition, there is no possibility that a stress may be concentrated on a concave part, and the strength may be lowered, unlike the countermeasure (3) of forming a linearly extending concave part in the outer peripheral surface of column parts of a cage along the axial direction, and of forming a parting line in the concave part.

Further, the apex positions 7, 7, ... on the radial outer surface 5, which is formed into a regular polygonal shape when viewed in the axial direction, of each of the outer ring guided resin cages 1A and 1B, serve as the arc-shaped convex surfaces 8, 8, ... when viewed in the axial direction. Thus, a portion of the radial outer surface 5, which comes into contact with the inner peripheral surface of the bearing outer ring D for guiding each of the cages 1A and 1B, has a smooth arc shape. This makes it possible to reduce a rotational torque of each of the bearings A and B, and to reduce wear of each of the cages 1A and 1B.

In the foregoing description, an example is described, in which the outer ring guided resin cage of the present invention is used for an angular ball bearing or for a cylindrical roller bearing. The outer ring guided resin cage of the present invention, however, may be used for a rolling bearing other than an angular ball bearing and a cylindrical roller bearing, as far as the outer ring guided resin cage is an outer ring guided cage to be guided by the inner peripheral surface of a bearing outer ring.

### Reference Signs List

1A, 1B Outer ring guided resin cage
2, 3 Annular ring-shaped part
4 Column part
5 Radial outer surface
6 Outer surface corresponding to side of regular polygonal shape
7 Apex position of regular polygonal shape
8 Arc-shaped convex surface when viewed in axial direction
9 Injection molding die
10, 10A, 10B Slide core
11 Inner diameter core
12 Arc-shaped concave surface when viewed in axial direction
A Angular ball bearing
B Cylindrical roller bearing
C Rolling element
D Outer ring
E Inner ring
F Slide core array
G Gate
H Cylindrical surface
P Pocket
PL Burr formed on parting line

## Claims

1. An outer ring guided resin cage (1A, 1B) comprised of two annular ring-shaped parts (2, 3) away from each other in an axial direction, and a plurality of column parts (4, 4, ...) for connecting between the annular ring-shaped parts (2, 3), and configured such that rolling elements (C, C, ...) of a rolling bearing (A, B) are accommodated in pockets (P, P, ...) to be formed between the column parts (4, 4) adjacent to each other, and that the rolling elements (C, C, ...) are separated from each other at an equi-distance so that the rolling elements (C, C, ...) do not come into contact with each other, the outer ring guided resin cage (1A, 1B) being guided by an inner peripheral surface of an outer ring (D) of the bearing (A, B), **characterized in that**
a radial outer surface (5) facing the outer ring (D) has a regular polygonal shape when viewed in the axial direction,
the column part (4) is formed at the middle of an outer surface (6) in a peripheral direction, the outer surface (6) corresponding to a side of the regular polygonal shape, and
burrs (PL, PL, ...) formed on a parting line extend in the axial direction on a radial outer surface of the column parts (4, 4, ...).

2. The outer ring guided resin cage (1A, 1B) according to claim 1, **characterized in that** the radial outer surface (5) with the regular polygonal shape has its adjacent sides (6, 6) connected with an arc-shaped convex surface (8) in an axial direction view.

3. An injection molding die (9) for use in manufacturing an outer ring guided resin cage (1A, 1B) by radial draw injection molding, the outer ring guided resin cage (1A, 1B) being comprised of two annular ring-shaped parts (2, 3) away from each other in an axial direction, and a plurality of column parts (4, 4, ...) for connecting between the annular ring-shaped parts (2, 3), and being configured such that rolling elements (C, C, ...) of a rolling bearing (A, B) are accommodated in pockets (P, P, ...) to be formed between the column parts (4, 4) adjacent to each other, and that the rolling elements (C, C, ...) are separated from each other at an equi-distance so that the rolling elements (C, C, ...) do not come into contact with each other, the outer ring guided resin cage (1A, 1B) being guided by an inner peripheral surface of an outer ring (D) of the bearing (A, B), **characterized in that**
an inner surface which forms a radial outer surface (5) on a slide core array (F) constituted by a plurality of slide cores (10, 10, ...) arrayed side by side in a peripheral direction has a regular polygonal shape when viewed in the axial direction, the inner surface forming the radial outer surface (5) and the pockets (P, P, ...) of the cage (1A, 1B),
a middle of the pockets (P, P, ...) in the peripheral direction serves as an apex position (7) of the regular polygonal shape, and
a radial outer surface of the column parts (4, 4, ...) serves as a divided position of the slide cores (10, 10, ...).

4. The injection molding die (9) according to claim 3, **characterized in that**
the inner surface of the slide core array (F) with the regular polygonal shape has its two adjacent sides connected with an arc-shaped concave surface (12) in an axial direction view.

5. An outer ring guided resin cage (1A, 1B) manufacturing method comprising:
manufacturing the outer ring guided resin cage (1A, 1B) by radial draw injection molding with use of the injection molding die (9) according to claim 3 or 4.

## Patentansprüche

1. Außenringgeführter Harzkäfig (1A, 1B), der aus zwei ringförmigen Teilen (2, 3) besteht, die in einer axialen Richtung voneinander beabstandet sind, und mit mehreren Säulenabschnitten (4, 4, ...) für eine Verbindung zwischen den ringförmigen Teilen (2, 3), wobei der Harzkäfig derart konfiguriert ist, dass Rollelemente (C, C, ...) eines Wälzlagers (A, B) in Taschen (P, P, ...) aufgenommen werden, die zwischen einander benachbarten Säulenabschnitten (4, 4) gebildet werden sollen, und dass die Rollelemente (C, C, ...) in einem gleichen Abstand voneinander derart beabstandet sind, dass die Rollelemente (C, C, ...) nicht miteinander in Kontakt kommen, wobei der außenringgeführte Harzkäfig (1A, 1B) durch eine Innenumfangsfläche eines Außenringes (D) des Lagers (A, B) geführt wird;
**dadurch gekennzeichnet, dass**
eine dem Außenring (D) zugewandte radiale Außenfläche (5) in der axialen Richtung betrachtet eine regelmäßige polygonale Form hat;
der Säulenabschnitt (4) an der Mitte einer Außenfläche (6) in einer Umfangsrichtung ausgebildet ist, wobei die Außenfläche (6) einer Seite der regelmäßigen polygonalen Form entspricht; und
Grate (PL, PL, ...), die auf einer Trennlinie ausgebildet sind, sich in der axialen Richtung auf einer radialen Außenfläche der Säulenabschnitte (4, 4, ...) erstrecken.

2. Harzkäfig (1A, 1B) nach Anspruch 1, **dadurch gekennzeichnet, dass** benachbarte Seiten (6, 6) der radialen Außenfläche (5) mit der regelmäßigen polygonalen Form mit einer in einer axialen Richtung betrachtet bogenförmigen konvexen Fläche (8) verbunden sind.

3. Spritzgießwerkzeug (9) zur Verwendung bei der Herstellung eines außenringgeführten Harzkäfigs (1A, 1B) durch radiales Streck-Spritzgießen, wobei der außenringgeführte Harzkäfig (1A, 1B) aus zwei ringförmigen Teilen (2, 3), die in einer axialen Richtung betrachtet voneinander beabstandet sind, und mehreren Säulenabschnitten (4, 4, ...) für eine Verbindung zwischen den ringförmigen Teilen (2, 3) besteht, wobei der Harzkäfig derart konfiguriert ist, dass Rollelemente (C, C, ...) eines Wälzlagers (A, B) in Taschen (P, P, ...) aufgenommen werden, die zwischen den Säulenabschnitten (4, 4) benachbart zueinander ausgebildet werden sollen, und dass die Rollelemente (C, C, ...) in einem gleichen Abstand voneinander derart beabstandet sind, dass die Rollelemente (C, C, ...) nicht miteinander in Kontakt kommen, wobei der außenringgeführte Harzkäfig (1A, 1B) durch eine Innenumfangsfläche eines Außenringes (D) des Lagers (A, B) geführt wird;
**dadurch gekennzeichnet, dass**
eine Innenfläche, die eine radiale Außenfläche (5) auf einer Gleitkernanordnung (F) bildet, die durch mehrere Gleitkerne (10, 10, ...) gebildet wird, die Seite an Seite in einer Umfangsrichtung angeordnet sind, in der axialen Richtung betrachtet eine regelmäßige polygonale Form hat, wobei die Innenfläche die radiale Außenfläche (5) und die Taschen (P, P, ...) des Käfigs (1A, 1B) bildet;
eine Mitte der Taschen (P, P, ...) in der Umfangsrichtung als eine Scheitelposition (7) der regelmäßigen polygonalen Form dient; und
eine radiale Außenfläche der Säulenabschnitte (4, 4, ...) als eine Trennposition der Gleitkerne (10, 10, ...) dient.

4. Spritzgießwerkzeug (9) nach Anspruch 3, **dadurch gekennzeichnet, dass**
die zwei benachbarten Seiten der Innenfläche der Gleitkemanordnung (F) mit der regelmäßigen polygonalen Form mit einer in einer axialen Richtung betrachtet bogenförmigen konkaven Fläche (12) verbunden sind.

5. Verfahren zum Herstellen eines außenringgeführten Harzkäfigs (1A, 1B), mit dem Herstellen des außenringgeführten Harzkäfigs (1A, 1B) durch radiales Streck-Spritzgießen unter Verwendung des Spritzgießwerkzeugs (9) nach Anspruch 3 oder 4.

## Revendications

1. Cage en résine (1A, 1B) guidée sur bague externe composée de deux parties de forme annulaire (2, 3) à distance l'une de l'autre dans une direction axiale, et d'une pluralité de parties de colonne (4, 4, ...) pour le raccordement entre les parties de forme annulaire (2, 3) et configurées de sorte que les éléments de roulement (C, C, ...) d'un palier à roulement (A, B) sont logées dans des poches (P, P, ...) à former entre les parties de colonne (4, 4) adjacentes entre elles et en ce que les éléments de roulement (C, C, ...) sont séparés les uns des autres à équidistance de sorte que les éléments de roulement (C, C, ...) ne viennent pas en contact entre eux, la cage en résine (1A, 1B) guidée sur bague externe étant guidée par une surface périphérique interne d'une bague externe (D) du palier (A, B), **caractérisée en ce que** :
une surface externe radiale (5) faisant face à la bague externe (D) a une forme polygonale régulière lorsqu'elle est observée dans la direction axiale,
la partie de colonne (4) est formée au centre d'une surface externe (6) dans une direction périphérique, la surface externe (6) correspondant à un côté de la forme polygonale régulière, et
des bavures (PL, PL, ...) formées sur un plan de joint s'étendent dans la direction axiale sur une surface externe radiale des parties de colonne (4, 4, ...).

2. Cage en résine (1A, 1B) guidée sur bague externe selon la revendication 1, **caractérisée en ce que** :
la surface externe radiale (5) avec la forme polygonale régulière a ses côtés (6, 6) adjacents raccordés avec une surface convexe en forme d'arc (8) sur une vue dans la direction axiale.

3. Matrice de moulage par injection (9) destinée à être utilisée pour fabriquer une cage en résine (1A, 1B) guidée sur bague externe par le moulage par injection par aspiration radiale, la cage en résine (1A, 1B) guidée sur bague externe étant composée de deux parties de forme annulaire (2, 3) à distance l'une de l'autre dans une direction axiale, et d'une pluralité de parties de colonne (4, 4, ...) pour le raccordement entre les parties de forme annulaire (2, 3), et étant configurées de sorte que les éléments de roulement (C, C, ...) d'un palier à roulement (A, B) sont logés dans des poches (P, P, ...) à former entre les parties de colonne (4, 4) adjacentes entre elles, et en ce que les éléments de roulement (C, C, ...) sont séparés les uns des autres à équidistance de sorte que les éléments de roulement (C, C, ...) ne viennent pas en contact entre eux, la cage en résine (1A, 1B) guidée sur bague externe étant guidée par une surface périphérique interne d'une bague externe (D) du palier (A, B), **caractérisée en ce que** :
une surface interne qui forme une surface externe radiale (5) sur une matrice de noyau coulissant (F) constituée par une pluralité de noyaux coulissants (10, 10, ...) agencés côte à côte dans une direction périphérique a une forme polygonale régulière lorsqu'elle est observée dans la direction axiale, la surface interne formant la surface externe radiale (5) et les poches (P, P, ...) de la cage (1A, 1B),
une partie centrale des poches (P, P, ...) dans la direction périphérique sert de position de sommet (7) de la forme polygonale régulière, et
une surface externe radiale des parties de colonne (4, 4, ...) sert de position divisée des noyaux coulissants (10, 10, ...).

4. Matrice de moulage par injection (9) selon la revendication 3, **caractérisée en ce que** :
la surface interne de la matrice de noyau coulissant (F) avec la forme polygonale régulière a ses deux côtés adjacents raccordés avec une surface concave en forme d'arc (12) sur une vue dans la direction axiale.

5. Procédé de fabrication de cage en résine (1A, 1B) guidée sur bague externe comprenant l'étape consistant à :
fabriquer la cage en résine (1A, 1B) guidée sur bague externe par moulage par injection par aspiration radiale à l'aide de la matrice de moulage par injection (9) selon la revendication 3 ou 4.
